Europäisches Patentamt

European Patent Office

Office européen des brevets

(19)

(11) Veröffentlichungsnummer: **0 254 795 B1**

(12) **EUROPÄISCHE PATENTSCHRIFT**

(45) Veröffentlichungstag der Patentschrift: **24.07.91**

(51) Int. Cl.5: **B29C 53/32, B29C 59/00**

(21) Anmeldenummer: **87100369.5**

(22) Anmeldetag: **14.01.87**

(54) **Verfahren zum Verbessern der Aufwickelcharakteristiken von thermoplastischen Folien und thermoplastische Folie, hergestellt nach dem Verfahren.**

(30) Priorität: 30.07.86 US 891937

(43) Veröffentlichungstag der Anmeldung:
03.02.88 Patentblatt 88/05

(45) Bekanntmachung des Hinweises auf die
Patenterteilung:
24.07.91 Patentblatt 91/30

(84) Benannte Vertragsstaaten:
BE DE FR GB LU NL

(56) Entgegenhaltungen:
EP-A- 0 036 680
CH-A- 512 982
DE-A- 2 546 706
GB-A- 2 040 792
US-A- 3 380 580

(73) Patentinhaber: HOECHST CELANESE CORPO-
RATION
Route 202-206 North
Somerville, N.J. 08876(US)

(72) Erfinder: Penoyer, John A.
106 Sturbridge Drive
Greenville South Carolina 29607(US)

(74) Vertreter: Zounek, Nikolai, Dipl.-Ing. et al
c/o KALLE Niederlassung der Hoechst AG
Patentabteilung Postfach 3540
Rheingaustrasse 190 D-6200 Wiesbaden
1(DE)

**Beschreibung**

Die Erfindung betrifft ein Verfahren zum Verbessern der Aufwickelcharakteristik von thermoplastischen Folien gemäß Anspruch 1 und thermoplastische Folien, hergestellt nach dem Verfahren gemäß oberbegriff des Anspruchs 13.

Die Herstellung von Bahnen aus thermoplastischen Folien mit hohem Zug-E-Modul ist bekannt. Beispielsweise wird eine Polyethylenterephthalatfolie in der Weise hergestellt, daß zuerst geschmolzenes Polyethylenterephthalatharz durch eine Schlitzdüse extrudiert wird, um eine Gießschmelze aus Polyethylenterephthalat zu formen. Die Schmelze wird auf einer Gießtrommel abgeschreckt, um eine gegossene Folie größerer Dicke, eine sogenannte Vorfolie, zu erzeugen. Die Gießfolie wird biaxial in Längs- und Querrichtung gestreckt, um die Folie gewünschter Dicke zu erhalten. Die Größe der auf die Folie in den zwei zueinander senkrechter Richtungen ausgeübten Streckung ist eine Funktion der gewünschten Zugeigenschaften, die der Hersteller der Folie aufprägen will. Die biaxial gestreckte Folie wird anschließend einer Wärmebehandlung bei erhöhten Temperaturen unterzogen, um die Folie zu entspannen und zu kristallisieren und ihr die gewünschte thermische Stabilität zu verleihen. Die Folie wird unmittelbar nach der Wärmebehandlung abgekühlt und, nach Bearbeitung der Ränder, auf eine Aufwickelrolle oder Leitrolle aufgewickelt. Die Aufwickelrolle wird üblicherweise in Standardbreiten von Folien in Längsrichtung geschnitten. Diese Folien werden zu sogenannten 'Schnittrollen`' bzw. konfektionierten Rollen aufgewickelt. In den meisten Fällen werden die konfektionierten Rollen gelagert und/oder zur Weiterverarbeitung bzw. zu dem Verbraucher versandt.

Aus dem Dokument US-A 3,380,580, von welchem die unabhäugigen Ansprüche 1 und 13 ausgehen, sind Folien mit geprägten Seitenkanten bekannt, die mittels Kordierwerkzeugen in Form von Prägerollen geformt werden. Desweiteren sind in diesem Dokument Folien beschrieben, die im Randbereich ein anderes visuelles Aussehen als die übrige Folienbahn aufweisen, indem die Seitenkanten aus einem gefärbten Extrusionsmaterial hergestellt werden. Die visuell unterschiedlichen Kanten der Folienbahn bringen keine Verbesserung der Aufwickelcharakteristik der Folienbahn, sondern dienen nur dazu die Seitenkanten beim Abwickeln der Folienbahn leichter erkennen zu können. Die Randbereiche dieser bekannten Folien werden entweder durch Druckkontakt mittels eines Kordierwerkzeuges verformt oder sind überhaupt nicht verformt, zeigen stattdessen nur einen visuellen Unterschied zu der Folienbahn zwischen den Randbereichen.

In dem Dokument CH-A 512,982 sind thermoplastische Kunststoffolienbahnen beschrieben, die beidseitig an oder in sehr dichtem Abstand zu den Bahnkanten an der Ober- oder Unterseite der Bahn schmale, dünne Auftragungen eines solchen Mittels aufweist, das einerseits beim Aufwickeln der Bahn die einzelnen Folienlagen derart miteinander verklebt, daß die zwischen den einzelnen Lagen befindliche Luft beim Lagern des Wickels nicht oder nur sehr langsam entweicht, und das andererseits die Folienlagen nur soweit verklebt, daß sie sich beim Abwickeln ohne Beschädigungen trennen lassen. Bei diesen schmalen, dünnen Auftragungen des Klebemittels handelt es sich um durchgehende Stege, die keine Unterbrechungen aufweisen, d.h. die kontinuierlich und nicht intermittierend aufgetragen werden. Die Auftragungen erfolgen mittels Auftragsdüsen oder feineinstellbarer Druckwerke, wobei in die Auftragungen schmale Bändchen oder Fäden eingelassen sein können. Die Dicke derartiger in den Randbereichen verformten Folien liegt im Bereich zwischen 25 um und kleiner 200 $\mu$m.

Für viele Anwendungsfälle sind die Oberflächencharakteristiken eines thermoplastischen Folienbandes für die Wieiterverarbeitung sehr wesentlich. Ebenso wichtig ist die Gleichförmigkeit der Foliendicke und die Gleichförmigkeit der Oberflächencharakteristiken der Folie. Von Nachteil ist es, daß die hohen Aufwickelgeschwindigkeiten am Ende der Herstellung von Filmen mit hohem Zug-E-Modul die Qualität der Folie vermindern können, teilweise dadurch, daß es zu einer Foliendeformation und zu Oberflächenverkratzungen bei Folien mit hohem Zug-EModul, wie dies bei Polyester und Polyimiden der Fall ist, kommen kann. Wird eine thermoplastische Folienbahn, beispielsweise aus Polyethylenterephthalat, aufgewickelt, so ist es das Ziel, eine ideale Folienrolle zu erzeugen, die dadurch definiert ist, daß sie einen perfekten kreisförmigen Zylinder, dessen Umrißzylindererzeugenden senkrecht auf die Kreisgrundfläche stehen, bildet, wobei die Druckverteilung über die gesamte Rolle gleichförmig ist. Die einzelnen Folienschichten einer idealen Folienrolle sind so übereinander gelagert, daß ihre Kanten ebene und glatte Oberflächen an beiden Stirnflächen der Rolle bilden. Das Aussehen einer idealen Folienrolle zeigt nicht die allgemein als "nicht-ideale" Bahncharakteristiken bezeichneten Mängel, wie beispielsweise "Fehlerstreifen", "Querbeulen", "Wabenstruktur", "Pickel", "versetzte Schichten" und "Teleskopeffekt". Diese Termini sind im folgenden näher erläutert:

Fehlerstreifen -

Veränderungen in der Bahndicke, gemessen quer zu der Maschinen- oder Längsrichtung der Folienbahn, die ungleichförmige Drücke in der aufgewickelten Folienrolle bewirken.

Querbeulen -
Muster mit flacher oder nicht gleichförmiger Krümmung auf der Oberfläche einer Folienrolle, die sich in Axialrichtung erstrecken und die durch entsprechende Druckgradienten in Umfangs- und in Radialrichtung begleitet sind.

Wabenstruktur -
Muster ungleichförmiger Glätte und mit einer Druckverteilung ähnlich Hühner- oder Zelldraht. Dieses Muster kann auf der Oberfläche oder versteckt unterhalb der Oberflächenschichten auftreten. Es kann während des Aufwickelns auftreten oder im Laufe der Zeit sich entwickeln, wenn eingefangene Luft entweicht, die eine nicht-gleichförmige Druckverteilung anzeigt.

Pickel -
sind lokale harte Flecken bzw. Punkte, die im allgemeinen eine runde Gestalt aufweisen und in der Höhe und im Durchmesser entsprechend ihrer Stärke sich ändern. Des öfteren werden sie beim Aufwickeln durch den Einschluß eines Schmutzpartikels zwischen den Schichten der Folienrolle verursacht. Aufeinanderfolgende Schichten werden oft durch den lokalen nicht-gleichförmigen Druck zerstört, der aus dem "Pickel"-Defekt resultiert.

Versetzte Schichten -
Darunter sind einzelne oder Gruppen von Folienschichten zu verstehen, deren Ränder aus der Stirnfläche einer Folienrolle vorspringen. Versetzte Schichten entstehen häufig als Folge einer momentanen Spitze in der Größe der Aufwickelspannung oder einer momentanen Veränderung der Aufwickelrichtung.

Teleskopiereffekt -
Darunter ist zu verstehen, daß die Folienrolle einen Teil aufweist, dessen Schichten systematisch axial gegenüber einer Konfiguration mit perfekt übereinandergestapelten Schichten versetzt sind. Dieser Defekt kann während des Aufwickelns oder während der Handhabung nach dem Aufwickeln auftreten. Er tritt besonders häufig in Folienrollen auf, die mit niedrigen Radialdrücken aufgewickelt werden und die eine geringe Oberflächenreibung besitzen. Ein glattes und gleichförmig abgeschrägtes Fadenkreuzdickenprofil läßt die Tendenz einer Rolle, während des Aufwickelns zu teleskopieren, ansteigen.

Sorgfältige Prozeßsteuerung, inbesondere in bezug auf die Foliendickengleichmäßigkeit, eliminiert oder reduziert wesentlich das Auftreten und die Stärke der nicht-idealen Folienbandcharakteristiken, wie sie voranstehend angeführt sind. Eine Wärmebehandlung nach dem Aufwickeln, wie sie in der US-Patentschrift Nr. 3,873,664 beschrieben ist, kann gleichfalls die Foliendeformation als Folge des Aufwickelns von thermoplastischen Folien mit hohem Zug-E-Modul verringern. Etliche Folienhersteller haben auch schon vorsätzlich die Folienoberfläche modifiziert, um die Aufwickelcharakteristiken der Folie zu verbessern. Insbesondere werden beispielsweise die äußeren Randbereiche in einer Breite von etwa 3,1 bis 12,7 mm des Folienbandes geprägt ("verformt"), um das Phänomen der "versetzten Schichten" zu verhindern. Eine Kontaktverformung wird typischerweise mit Hilfe einer zylinderförmigen metallischen Rolle erzeugt, die in Kontakt mit dem Rand des bewegten Folienbandes ist. Die Rolle weist kleine Vorsprünge auf, die sich radial nach außen erstrecken und über den Umfang der Rolle in gleichmäßigen Abständen verteilt sind. Eine zweite, gummierte Rolle befindet sich im Drehkontakt mit der gegenüberliegenden Folienoberfläche, unmittelbar unter der Verformungsrolle. Eine Linie von beabstandeten Eindrücken wird im Folienrandbereich erzeugt, wenn dieser die sich drehende Verformungsrolle passiert. Diese Einkerbungen dienen dazu, das Phänomen der versetzten Schichten während des Aufwickelns zu minimalisieren, indem diese Einkerbungen mit den Einkerbungen der zuvor aufgewickelten Folienschicht ausgerichtet und in Eingriff sind. Eine vollkommene Ausrichtung der Einkerbungen ist infolge der gewählten Verformungsmuster und als Folge des ansteigenden Radius, bedingt durch jede nachfolgen-de Schicht des Wickels, unmöglich. Die geprägten Einkerbungen, die nicht im exakten Eingriff mit einer darunterliegenden Schicht des Wickels stehen, bilden Durchgänge, durch welche die mitgezogene Luft aus der Folienrolle entweichen kann. Sie bilden desweiteren einen Bereich ohne Druckkontakt an den Rändern einer Rolle. Dies unterstützt die Konformität der Bandoberflächen innerhalb der Rolle während des Aufwickelns.

Der voranstehend beschriebene Kontaktverformungsprozeß ist für relativ dicke Folien (Dicke > 0,05 mm) mit hohem Zug-E-Modul geeignet, nicht jedoch für Folien mit geringerer Dicke. Die rotierenden Verformungs- und Gummirollen üben einen Druck- bzw. Zuggradienten über die Breite der Folie aus. Während dieser Zug- bzw. Druckgradient eine dicke Folie nicht wesentlich beeinflußt, kann er eine Dünnfolie erheblich deformieren, wodurch zusätzliche Aufwickelprobleme geschaffen werden. Weitere Probleme beim Verformen einer Folie umfassen eine Versatzbildung und die Verschmutzung der Folienbandoberfläche sowie die Notwendigkeit für die genaue Steuerung und Ausrichtung der Verformungsapparatur.

Aufgabe der Erfindung ist es, ein Verfahren zum Verbessern der Aufwickelcharakteristik von thermoplastischen Folien, insbesondere von Dünnfolien, zu schaffen, bei den die durch herkömmliche Kontaktverfahren zum Prägen oder Verformen auftretenden Fehlerstreifen, Querbeulen, Wabenstrukturen, Pickel, versetzte Lagen bzw. Schichten, Teleskopiereffekte und dergl. vermieden oder erheblich reduziert werden.

Diese Aufgabe wird durch ein Verfahren gelöst, bei dem die Oberfläche der Folie in zumindest einem Randbereich intermittierend und ohne Berührung der Folienoberfläche durch ein Kordierwerkzeug so geformt wird, daß die Dicke der oberflächengeformten Folie größer als die Dicke der nichtoberflächengeformten Folie ist, und bei dem die Größe des Dickenunterschieds 1 bis 8 μm, bei einer Dicke der ungeformten Folie im Bereich von 5 bis 50 μm, gewählt wird.

Die weitere vorteilhafte Ausgestaltung des Verfahrens ergibt sich aus den Ansprüchen 2 bis 12.

Die nach dem Verfahren hergestellte thermoplastische Folie mit zumindest in einem Randbereich in Längsrichtung der transportierten Folie in Matrixform angeordneten Verformungen zeichnet sich dadurch aus, daß die Abstände der ohne Berührung der Folie erzeugten Verformungen voneinander gleich und/oder ungleich groß sind und daß die Verformungshöhe des/der Randbereiche (s) durch die Verformungen 1 bis 8 um beträgt. Die weitere Ausgestaltung der Folie ergibt sich aus den Merkmalen der Ansprüche 14 bis 18.

Mit der Erfindung wird der Vorteil erzielt, daß ohne physikalischen Kontakt die Oberfläche der Folie verformt wird. Die kontaktlose Verformung der thermoplastischen Folie läßt hohe Aufwickelgeschwindigkeiten einer Folie mit hohem Zug-E-Modul zu, ohne daß ein Druck- bzw. Spannungsgradient quer über die Bahnbreite entsteht und ohne signifikanten Folienabbau oder Folienverschmutzung.

Unter einer Folie mit hohem Modul ist zu verstehen, daß diese Folie einen relativ hohen Zug-E-Modul im Vergleich zu dem Druck-E-Modul der aufeinandergestapelten Schichten bzw. Lagen der Folie besitzt. Eine Folie mit relativ niedrigem Modul besitzt einen Zug-E-Modul, der ungefähr die gleiche Größe wie der Druck-E-Modul aufweist. Polyester und Polyimide sind Exponenten von Folien mit hohem Modul, während Polyolefinfolien typischerweise einen niedrigen Modul besitzen.

Mit dem Begriff "kontaktlose Verformung" ist gemeint, daß jede intermittierende Oberflächenmodifikation in zumindest einem Randbereich einer sich bewegenden thermoplastischen Folie zu einer Verbesserung der Aufwickelcharakteristiken der Folie führt, und keinen körperlichen Kontakt der Folienoberfläche mit den herkömmlichen Einrichtungen für die Oberflächenmodifikation umfaßt. Eine Kontaktverformung zur Oberflächenmodifikation ist nicht Gegenstand der vorliegenden Erfindung und wird von der voranstehend gegebenen Definition nicht erfaßt.

Im folgenden wird die Erfindung anhand von Ausführungsbeispielen näher erläutert. Eine bevorzugte Ausführungsform der Erfindung umfaßt einen herkömmlichen Tintenstrahl- bzw. Farbdrucker als Einrichtung für die Modifikation der Folienoberfläche. Ein Tintenstrahldrucker ist eine Form von Punktmatrixdrucker, bei dem ein Tintenstrahl aus einer mikroskopischen Düse austritt und in kleine Tröpfchen aufgeteilt wird, die auf spezifizierte Positionen auf dem Druckmedium gerichtet werden. Die Grundtheorie und der Betrieb von Tintenstrahldruckern sind in der Veröffentlichung "Ink-jet printing", Verfasser: Kuhn und Myers, 240 Scientific American 162 (1979) näher beschrieben, und die Offenbarung in dieser Veröffentlichung ist in ihrer Gesamtheit Bestandteil dieser Anmeldung.

Bei dem Tintenstrahldrucker kann es sich um jedes herkömmliche Modell handeln, und er soll nur für eine rechnergestützte Steuerung adaptiert sein, um die Tintentröpfchen auf den Rand der bewegten Folienoberfläche richten zu können. Der Betrieb des Tintenstrahldruckers wird mit der Foliendicke-Information koordiniert, um jede nicht beabsichtigte Schwankung in der Foliendicke zu kompensieren und um sicherzustellen, daß die bedruckten Randbereiche an jeder Seite der Folienbahn sogenannte "symmetrische Kanten" mit im wesentlichen gleicher Dicke beitragen. Bevorzugt wird die Tintenstrahldruckapparatur an einer Stelle angeordnet, an der üblicherweise eine Kontaktverformungsapparatur sich befindet, d.h. nahe an einem Spannrahmenaustritt oder nahe an einem Abwickelgestell oder einem Längsschneider für die Folie.

Bei dieser bevorzugten Ausführungsform der Erfindung berühren nur die Tintentröpfchen die Folienoberfläche. Die Einrichtung für die Folienoberflächenmodifikation, d.h. der Tintenstrahl- bzw. Farbstrahldrucker, gelangt nicht in physikalischen Kontakt mit der Folienoberfläche.

Die Folienverarbeitungsgeschwindigkeiten, die zur Verfügung stehende Länge an Band zwischen dem Punkt der Tintenaufbringung und dem nächsten Punkt für den Folienkontakt mit einer anderen Oberfläche und die Adhäsion der Tinte bzw. der Druckfarbe zu dem Folienband bestimmen die Arten von Tinten, die beim Erfindungsgegenstand angewandt werden können, wobei berücksichtigt werden muß, daß die Tinte auf der Folienoberfläche vor dem Aufwickeln getrocknet und gehärtet sein muß. Daher gilt, daß, je höher die lineare Foliengeschwindigkeit und je kürzer der Folienweg bis zu dem nächsten Kontakt ist, desto schneller die Tinte trocknen muß. Die Tintentrocknungszeit kann durch Anwendung von Wärme, Ventilation oder beiden gemeinsam verkürzt werden. Im allgemeinen beträgt eine annehmbare Trocknungszeit weniger als fünf Sekunden, bevorzugt sind Trocknungszeiten kürzer als zwei Sekunden. Befindet sich der Tintenstrahldrucker nahe einem Abwickelgestell/Längsschneider, kann auch eine Trocknungszeit von einer Sekunde oder weniger, infolge des kürzeren kontaktfreien Bahnpfads, der an solchen Stellen vorhanden ist, ausreichend sein.

Zusätzlich zu den schnellen Trocknungseigenschaften muß die Tinte bzw. die Druckfarbe an der thermoplastischen Folienoberfläche haften. Bevorzugt kann die Oberfläche des Randes der Folie durch eine elektrische Koronaentladung oder durch eine sonstige Oberflächenmodifikation bearbeitet werden, bevor die Tinte aufgesprüht wird, um die Adhäsion der Tinte auf der Folienoberfläche zu verstärken. Die Tinte bzw. Druckfarbe ist im trockenen Zustand klebefrei, so daß sie nicht dazu neigt, das Abwickeln der Folie von der Rolle zu behindern.

Weitere Zwangsbedingungen können die Anzahl der geeigneten Tinten bzw. Druckfarben begrenzen. Hierzu gehört die Einwirkung der Tinte auf die Folienregenerierbarkeit und ihre Verträglichkeit mit den Beschichtungsformulierungen des Kunden sowie mit den Verarbeitungskriterien. Die Tinte kann opak, gefärbt oder transparent sein und kann auch fluoreszierende Pigmente enthalten.

Tinten bzw. Druckfarben, die eine adäquate Adhäsion mit verschiedenen thermoplastischen Folienbahnen aufweisen und eine annehmbare kurze Trocknungszeit besitzen, umfassen im Lösungsmittel einen hohen Anteil an Feststoff enthaltenden UV-härtbaren Tinten, die bei Tintenstrahldruckanwendungen eingesetzt werden. Eine insbesondere geeignete UV-härtbare Tinte kann beispielsweise von der US-Firma American Technologies, Inc., Neenah, Wisconsin, unter der Handelsbezeichnung AMJET W-1210, bezogen werden. Tinten bzw. Druckfarben in Lösungsmitteln, die kurze Trocknungszeiten aufweisen, sind beispielsweise VIDEOJET 16-7800, 16-8100 und 16-8200, die von der US-Firma Videojet Systems International, einer Division von A.B. Dick Company, 2200 Arthur Avenue, Elk Grove Village, Illinois 60007, geliefert werden.

Kontaktverformung, wie beispielsweise Kontaktkordieren, wird unter anderem bei biaxial gestreckten Polyethylen-terephthalatfolien von großen Folienstärken im Bereich von 50 bis 350 m angewandt, wobei eine Einprägung erzeugt wird, die die gemessene Dicke der Folie um 5 bis 20 % erhöht. Diese Dickendifferenz ist als sogenannte "Kordierhöhe" bekannt und kann eingestellt werden, um teilweise die unbeabsichtigten Unterschiede in der mittleren Foliendicke von einem Randbereich zu dem anderen Randbereich einer Aufwickelbahn durch Einstellung des von dem Kordierrad ausgeübten Druckes auf die Folie zu kompensieren. Das Prägemuster kann auch durch den Ersatz des Kordierrades durch ein anderes Rad mit einem unterschiedlichen Muster geändert werden. Es ist verhältnismäßig beschwerlich, das Verformungsmuster einzustellen, da die Verformungsapparatur oder der Prägekopf von der Folie wegbewegt werden muß, das Kordierrad ersetzt und die Verformungsapparatur wieder ausgerichtet werden muß.

Im Gegensatz dazu ermöglicht das kontaktlose Verfahren nach der Erfindung eine schnelle, präzise und passende Steuerung der "Kordierhöhe" von Dünnfolien im Dickenbereich von 5 bis 50 μm. Beispielsweise können bei herkömmlichen Tintenstrahldruckern die Zeichen, die gedruckt werden, ebenso wie das Typenbild derselben, schnell geändert werden. Die "Kordierhöhe" der Tintentropfen kann im Bereich von 0,5 bis 5,0 μm eingestellt werden. Die tatsächlich benötigte Menge an Tinte, um eine "Kordierhöhe" zu erreichen, die effektiv die Aufwickelcharakteristiken der Folie beeinflußt, hängt von einer Anzahl von Faktoren, wie beispielsweise den gedruckten Mustern, der Foliengeschwindigkeit und der Folienmodule, ab und kann ohne Schwierigkeiten empirisch durch einen Fachmann auf dem Gebiet der Folienherstellung bestimmt werden.

Es ist wichtig, daß die kontaktlose Oberflächenmodifikation der Erfindung intermittierend und nicht kontinuierlich erfolgt. Die Abstände zwischen individuellen, diskreten Oberflächenmodifikationen läßt es zu, daß eingefangene Luft in der aufgerollten Bahn während des Aufwickelns aus der Folienrolle entweichen kann. Der Abstand zwischen diskreten Modifikationen kann sich mit der Foliengeschwindigkeit, dem Prägemuster und der effektiven Kordierhöhe der Oberflächenmodifikation ändern. Die üblichen Abstände zwischen diskreten Oberflächenmodifikationen sind in etwa gleichgroß wie die charakteristischen Abstände, die bei einer Kontaktverformung erzeugt werden. Für Polyethylenterephthalatfolie, die mit einer Geschwindigkeit von ungefähr 330 m/min aufgewickelt wird, und mit einem Kontaktverformungsmuster mit einer effektiven Höhe von 7,6 μm geprägt ist, beträgt der Abstand zwischen benachbarten Verformungen ungefähr 3,2 mm.

Zusätzlich zu den primären Vorteilen beim Aufwickeln der Folie, die der kontaktlosen Verformung innewohnen, ermöglicht es die bevorzugte Ausführungsform, bei der Tintenstrahldrucker angewandt werden, dem Folienhersteller mit Leichtigkeit, gewünschte Informationen auf sein Produkt aufzubringen. Beispielsweise kann das Präge- bzw. Kordiermuster die Losnummer, Längenmarkierungen oder den Herstellernamen und/oder die Produktbezeichnung "American Hoechst Corporation Hostaphan®, Typ 2500 Polyesterfolie" enthalten.

Das Verformungs- bzw. Kordiermuster kann auch während des Aufwickelns mit Leichtigkeit geändert werden, um beispielsweise das Ende einer Rolle anzuzeigen, durch eine Angabe, wie "100 m oder weniger".

Eine weitere Ausführungsform der Erfindung verwendet einen Laser anstelle eines Tintenstrahldruckers, um den Randbereich der sich bewegenden Folienoberfläche vor dem Aufwickeln intermittierend zu modifizieren. Die durch einen Laserdrucker erzeugten Vorsprünge sind lokalisierte thermische Deformationen der Grundfolie infolge der partiellen Absorption von gebündeltem Licht, das in thermische Energie umgewandelt wird, des Lasers durch die Folie und können entweder tatsächliche Perforationen des Folienrandbereichs mit einem zugehörigen Wulst oder Schmelzhof sein, der jede Perforation umgibt, oder Laserdrucke. Die "Kordierhöhe" des einzelnen Vorsprungs kann durch Regeln der Intensität des Laserstrahls eingestellt werden.

Bei dieser zweiten Ausführungsform der Erfindung trifft nur die elektromagnetische Laserstrahlung auf die Folienoberfläche auf. Die Einrichtung für die Folienoberflächenmodifikation, das ist der Laserdrucker, kontaktiert physikalisch die Folienoberfläche nicht.

Verschiedene Arten von Lasern senden unterschiedliche Wellenlängen aus. Die Wirkung der Laserenergie hängt von den Aborptionscharakteristiken der thermoplastischen Folie bei der Wellenlänge des Lasers ab. Polyesterfolie absorbiert den Laserstrahl mit 10,6 $\mu$m Wellenlänge eines $CO_2$-Lasers wirksamer als die Laserstrahlung mit einer Wellenlänge von 1,06 $\mu$m eines "Yttrium/ Aluminiumgarnet ($Y_3Al_5O_{12}$) - Lasers, der auch als ein YAG-Laser bezeichnet wird. Die bevorzugte Absorption einer thermoplastischen Folie kann durch eine Untersuchung der Folie in einem Infrarotspektrographen vorabbestimmt werden, mit dessen Hilfe es möglich ist, die Lasererhitzungseinflüsse entsprechend der Wellenlänge auszuwählen und vorherzubestimmen.

Der Laserdrucker wird an der Stelle angeordnet, an der üblicherweise die Kontaktverformungsapparatur sich befindet, d.h. nahe dem Spannrahmenaustritt oder nahe einem Abwickelgestell oder einem Längsschneider für die Folienbahn. Durch die Verwendung von unterschiedlichen Lichtmasken können unterschiedliche Verformungsmuster auf die Folienoberfläche "aufgedruckt" werden. Der Betrieb des Lasers wird bevorzugt über einen Rechner gesteuert, der einen schnellen Wechsel des Verformungsmusters und der Aufwickelcharakteristiken der Folie ohne Unterbrechung der Folienherstellung oder des Längsschneidens der Folie ermöglicht.

Sowohl kontinuierlich arbeitende als auch gepulste Laser können verwendet werden. Ein kontinuierlich arbeitender (cw) Laser umfaßt eine Laserlichtquelle im Zusammenwirken mit Linsen und/oder Spiegeln, die den Lichtstrahl in die gewünschten Richtungen lenken. Beispielsweise durchläuft der Laserlichtstrahl einen Strahlaufweiter, der den Strahldurchmesser beispielsweise auf den zwei- bis dreifachen Wert vergrößert. Der aufgeweitete Strahl wird nachfolgend an zwei schwenkbaren elliptischen dielektrischen Spiegeln abgelenkt, die so angeordnet sind, daß ein Spiegel die x-Achsenablenkung des Strahls und der andere Spiegel die y-Achsenablenkung des Strahls steuert. Jeder Spiegel wird durch einen Galvanometermechanismus gedreht, der beispielsweise durch einen Rechner gesteuert wird.

Der Laserstrahl durchläuft dann eine ortsfeste Planlinse, die den Strahl auf die Oberflächenebene der thermoplastischen Folie fokussiert, wobei der Laserstrahl senkrecht auf die Folienoberfläche einfällt. Intermittierender Einfall kann durch Ablenken des Laserstrahls weg von der Folienoberfläche erreicht werden oder mittels eines rotierenden Spiegels, auf den der Strahl auffällt oder eines ähnlich arbeitenden Strahlzerhackers.

Ein kontinuierlich arbeitendes Laserdrucksystem, das aufgrund der voranstehend beschriebenen allgemeinen Theorie betrieben wird, liefert beispielsweise die US-Firma Control Laser Corporation, 11222 Astronaut Blvd., Orlando, Florida 32821, unter dem Warenzeichen "INSTAMARK®"

Beide Ausführungsformen der vorliegenden Erfindung schalten das Problem des Spannungsgradienten, wie es sich bei der Kontaktverformung ergibt, aus. Weitere Vorteile der kontaktlosen Verformung sind die schnellen Änderungen des Vorformungsmusters und die Reduktion bzw. Eliminierung der Versatzformation und der daraus resultierenden Folienverunreinigung.

**Patentansprüche**

1. Verfahren zum Verbessern der Aufwickelcharakteristik von thermoplastischen Folien, bei dem die Oberfläche der Folie in zumindest einem Randbereich intermittierend und ohne Berührung der Folienoberfläche durch ein Kordierwerkzeug so geformt wird, daß die Dicke der oberflächengeformten Folie größer als die Dicke der nicht oberflächengeformten Folie ist und bei den die Größe des Dickenunterschieds 1 bis 8 $\mu$m, bei einer Dicke der ungeformten Folie im Bereich von 5 bis 50 $\mu$m, gewählt wird.

2. Verfahren nach Anspruch 1, dadurch gekennzeichnet, daß die sich gegenüberliegenden Randbereiche der gleichen Folienoberfläche geformt werden.

3. Verfahren nach Anspruch 2, dadurch gekennzeichnet, daß die Randbereiche der Oberfläche vor der Formgebung einer elektrischen Koronaentladung ausgesetzt werden.

4.  Verfahren nach Anspruch 1, dadurch gekennzeichnet, daß die Formgebung der Folie während ihrer Herstellung nach dem Austritt aus einer Spannrahmeneinrichtung vorgenommen wird.

5.  Verfahren nach Anspruch 4, dadurch gekennzeichnet, daß die Formgebung der Folie unmittelbar vor dem Aufwickeln zu einer Rolle erfolgt.

6.  Verfahren nach Anspruch 1, dadurch gekennzeichnet, daß die Formgebung der Folienoberfläche mittels eines Tintenstrahls eines Tintenstrahldruckers vorgenommen wird.

7.  Verfahren nach Anspruch 6, dadurch gekennzeichnet, daß der Tintenstrahl durch den rechnergesteuerten Tintenstrahldrucker pulsierend auf die zu formenden Bereiche der Folie aufgesprüht wird.

8.  Verfahren nach Anspruch 6, dadurch gekennzeichnet, daß für den Tintenstrahl eine UV-härtbare Druckfarbe verwendet wird und daß die aufgesprühte Druckfarbe auf der Folie zur Aushärtung mit einer UV-Lampe bestrahlt wird.

9.  Verfahren nach Anspruch 8, dadurch gekennzeichnet, daß die UV-härtbare Druckfarbe eine Trocknungszeit kürzer als 2 Sekunden bei Raumtemperatur und einer Bestrahlungsleistung von 30 bis 32 Watt/cm$^2$ der UV-Lampe hat.

10. Verfahren nach Anspruch 1, dadurch gekennzeichnet, daß die Formgebung der Folienoberfläche mittels eines Laserstrahls vorgenommen wird.

11. Verfahren nach Anspruch 10, dadurch gekennzeichnet, daß der Laserstrahl von einem gepulsten CO$_2$-Laser intermittierend auf die zu formenden Bereiche der Folienoberfläche abgestrahlt wird.

12. Verfahren nach Anspruch 10, dadurch gekennzeichnet, daß der Laserstrahl von einem kontinuierlich arbeitenden Wellenlaser geliefert wird.

13. Thermoplastische Folie, hergestellt nach dem Verfahren gemäß Anspruch 1, mit in zumindest in einem Randbereich in Längsrichtung der transportierten Folie in Matrixform angeordneten Verformungen, dadurch gekennzeichnet, daß die Abstände der ohne Berührung der Folie erzeugten Verformungen voneinander gleich und/ oder ungleich groß sind und daß die Verformungshöhe des/der Randbereiche(s) durch die Verformungen 1 bis 8 $\mu$m beträgt.

14. Thermoplastische Folie nach Anspruch 13, dadurch gekennzeichnet, daß sie eine Polyesterfolie mit einer Verformungshöhe des/der Randbereiche(s) durch die Verformungen von 1 bis 5 $\mu$m ist.

15. Thermoplastische Folie nach Anspruch 13, dadurch gekennzeichnet, daß sie eine Polyethylenterephthalatfolie mit einer Verformungshöhe des/der Randbereiche(s) durch die Verformungen von 1 bis 8 $\mu$m ist.

16. Thermoplastische Folie nach Anspruch 13, dadurch gekennzeichnet, daß sie eine Polyimidfolie ist.

17. Thermoplastische Folie nach Anspruch 13, dadurch gekennzeichnet, daß die Verformungen aus UV-gehärteten Druckfarbentröpfchen bestehen, die einen Abstand bis zu 3,2 mm voneinander aufweisen.

18. Thermoplastische Folie nach Anspruch 13, dadurch gekennzeichnet, daß die Verformungen lokale Perforationen, jede umgeben von einem Wulst, oder Vorsprünge sind, die durch lokale thermische Absorption von Laserlicht gebildet sind.

**Claims**

1.  Method of improving the winding characteristics of thermoplastic films, in which the surface of the film is shaped in at least one edge region intermittently and without contact of the film surface by a knurling tool in such a way that the thickness of the surface-shaped film is greater than the thickness of the non-surface-shaped film and in which the size of the difference in thickness is chosen to be I to 8 $\mu$m in the case of a thickness of the unshaped film in the range from 5 to 50 $\mu$m.

2.  Method according to Claim I, characterised in that the opposite edge regions of the same film surface are shaped.

3.  Method according to Claim 2, characterised in that the edge regions of the surface are exposed to an electrical corona discharge before shaping.

4. Method according to Claim I, characterised in that the shaping of the film is performed during its production after leaving a tentering frame device.

5. Method according to Claim 4, characterised in that the shaping of the film takes place immediately before winding-up to form a roll.

6. Method according to Claim I, characterised in that the shaping of the film surface is performed by means of an ink jet of an ink-jet printer.

7. Method according to Claim 6, characterised in that the ink jet is sprayed by the computer-controlled ink-jet printer in a pulsating manner onto the regions of the film to be shaped.

8. Method according to Claim 6, characterised in that a UV-curable printing ink is used for the ink jet and in that the sprayed-on printing ink on the film is irradiated with a UV lamp for curing.

9. Method according to Claim 8, characterised in that the UV-curable printing ink has a drying time shorter than 2 seconds at room temperature and at an irradiated power of 30 to 32 watts/cm$^2$ of the UV lamp.

10. Method according to Claim I, characterised in that the shaping of the film surface is performed by means of a laser beam.

11. Method according to Claim 10, characterised in that the laser beam is radiated from a pulsed $CO_2$ laser intermittently onto the regions of the film surface to be shaped.

12. Method according to Claim 10, characterised in that the laser beam is supplied by a continuous-wave laser.

13. Thermoplastic film, produced by the method according to Claim 1, having in at least one edge region deformations arranged in matrix form in the longitudinal direction of the transported film, characterised in that the spacings of the deformations, produced without contacting the film, from one another are equally and/or unequally large and in that the deformation height of the edge region(s) due to the deformations is 1 to 8 $\mu$m.

14. Thermoplastic film according to Claim 13, characterised in that it is a polyester film having a deformation height of the edge region(s) due to the deformations of I to 5 $\mu$m.

15. Thermoplastic film according to Claim 13, characterised in that it is a polyethyleneterephthalate film having a deformation height of the edge region(s) due to the deformations of 1 to 8 $\mu$m.

16. Thermoplastic film according to Claim 13, characterised in that it is a polyimide film.

17. Thermoplastic film according to Claim 13, characterised in that the deformations consist of UV-cured printing ink droplets which have a spacing of up to 3.2 mm from one another.

18. Thermoplastic film according to Claim I3, characterised in that the deformations are local perforations, each surrounded by a bead, or projections, which are formed by local thermal absorption of laser light.

**Revendications**

1. Procédé d'amélioration de la caractéristique d'enroulement de feuilles thermoplastiques, selon lequel on déforme la surface de la feuille, dans au moins une zone marginale, d'une manière intermittente et sans contact entre la surface de la feuille et un outillage de moletage, de façon telle que l'épaisseur de la feuille déformée en surface soit supérieure à l'épaisseur de la feuille non déformée en surface, et selon lequel on choisit une grandeur de la différence d'épaisseur qui soit de 1 à a $\mu$m, dans le cas d'une épaisseur de la feuille non déformée comprise entre 5 et 50 $\mu$m.

2. Procédé suivant la revendication 1, caractérisé en ce qu'on conforme les zones marginales opposées de la même surface de la feuille.

3. Procédé suivant la revendication 2, caractérisé en ce qu'avant la conformation, on soumet les zones marginales de la surface à une décharge électrique corona.

4. Procédé suivant la revendication 1, caractérisé en ce qu'on exécute la conformation de la feuille pendant sa fabrication, après qu'elle soit sortie d'un dispositif à cadre de tension.

5. Procédé suivant la revendication 4, caractérisé en ce que la conformation de la feuille a lieu immédiatement avant l'enroulement sous la forme d'un rouleau.

6. Procédé suivant la revendication 1, caractérisé en ce que la conformation de la surface de la feuille est effectuée au moyen d'un jet d'encre d'une imprimante à jet d'encre.

7. Procédé suivant la revendication 6, caractérisé en ce que le jet d'encre est projeté d'une manière pulsée, par l'imprimante à jet d'encre à commande par ordinateur, sur les zones de la feuille qui sont à conformer.

8. Procédé suivant la revendication 6, caractérisé en ce qu'on utilise pour le jet d'encre une couleur d'impression durcissable par rayonnement ultraviolet et en ce qu'on soumet la couleur d'impression, projetée sur la feuille, au rayonnement d'une lampe ultraviolet, en vue de son durcissement.

9. Procédé suivant la revendication 8, caractérisé en ce que la couleur d'impression durcissable par rayonnement ultraviolet présente une durée de séchage inférieure à 2 secondes à la température ambiante et est soumise à une puissance de rayonnement de la lampe ultraviolet de 30 à 32 watts/cm².

10. Procédé suivant la revendication 1, caractérisé en ce que la conformation de la surface de la feuille est effectuée au moyen d'un faisceau laser.

11. Procédé suivant la revendication 10, caractérisé en ce que le faisceau laser est émis d'une manière intermittente, par un laser au $CO_2$ à régime pulsé, sur les zones de la surface de la feuille qui sont à conformer.

12. Procédé suivant la revendication 10, caractérisé en ce que le faisceau laser est émis par un laser à rayonnement à fonctionnement continu.

13. Feuille thermoplastique produite par un procédé suivant la revendication 1, comprenant, sur au moins une zone marginale et dans la direction longitudinale de la feuille en cours de déplacement, des déformations disposées en forme d'agencement ordonné, caractérisée en ce que les espacements des déformations produites sans contact avec la feuille sont égaux entre eux et/ou inégaux et en ce que la hauteur de déformation de la ou des zones marginales due aux déformations est égale à 1 à 8 $\mu$m.

14. Feuille thermoplastique suivant la revendication 13, caractérisée en ce qu'elle est constituée d'une feuille de polyester présentant une hauteur de déformation de la ou des zones marginales, due aux déformations, qui est de 1 à 5 $\mu$m.

15. Feuille thermoplastique suivant la revendication 13, caractérisée en ce qu'elle est constituée d'une feuille de téréphtalate de polyéthylène comportant une hauteur de déformation de la ou des zones marginales, due aux déformations, qui est de 1 à 8 $\mu$m.

16. Feuille thermoplastique suivant la revendication 13, caractérisée en ce qu'elle est constituée d'une feuille de polyimide.

17. Feuille thermoplastique suivant la revendication 13, caractérisée en ce que les déformations sont constituées par des gouttelettes de couleur d'impression durcies par rayonnement ultraviolet qui présentent entre elles un espacement pouvant atteindre 3,2 mm.

18. Feuille thermoplastique suivant la revendication 13, caractérisée en ce que les déformations sont constituées par des perforations localisées, entourées chacune d'un bourrelet, ou par des saillies qui sont formées par l'absorption thermique localisée d'une lumière laser.